(19) Europäisches Patentamt / European Patent Office / Office européen des brevets

(11) **EP 3 905 130 B1**

(12) **EUROPEAN PATENT SPECIFICATION**

(45) Date of publication and mention
of the grant of the patent:
**20.12.2023 Bulletin 2023/51**

(21) Application number: **20172027.3**

(22) Date of filing: **29.04.2020**

(51) International Patent Classification (IPC):
*G06V 10/44* (2022.01)   *G06V 10/764* (2022.01)
*G06V 20/64* (2022.01)   *G06V 40/10* (2022.01)
*G06F 18/25* (2023.01)   *G06N 3/08* (2023.01)
*G06N 3/045* (2023.01)   *G06V 10/776* (2022.01)
*G06V 10/774* (2022.01)   *G06V 10/80* (2022.01)
*G06V 10/82* (2022.01)

(52) Cooperative Patent Classification (CPC):
G06N 3/08; G06F 18/253; G06N 3/045;
G06V 10/454; G06V 10/764; G06V 10/774;
G06V 10/776; G06V 10/806; G06V 10/82;
G06V 20/64; G06V 40/103

(54) **COMPUTER-IMPLEMENTED METHOD FOR 3D LOCALIZATION OF AN OBJECT BASED ON IMAGE DATA AND DEPTH DATA**

COMPUTERIMPLEMENTIERTES VERFAHREN ZUR 3D-LOKALISIERUNG EINES OBJEKTS BASIEREND AUF BILDDATEN UND TIEFENDATEN

PROCÉDÉ MIS EN ŒUVRE PAR ORDINATEUR POUR LA LOCALISATION 3D D'UN OBJET SUR LA BASE DE DONNÉES D'IMAGES ET DE DONNÉES DE PROFONDEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.11.2021 Bulletin 2021/44**

(73) Proprietor: **Robert Bosch GmbH**
**70442 Stuttgart (DE)**

(72) Inventors:
• **Linder, Timm**
**71032 Boeblingen (DE)**
• **Pfeiffer, Kilian Yutaka**
**L-1621 Luxembourg (LU)**
• **Vaskevicius, Narunas**
**70469 Stuttgart (DE)**

(56) References cited:
• **Timm Linder ET AL: "Towards Accurate 3D Person Detection and Localization from RGB-D in Cluttered Environments", , 5 October 2018 (2018-10-05), XP055726673, Retrieved from the Internet: URL:http://iliad-project.eu/wp-content/upl oads/2018/10/linder_irosws18_abstract_and_ poster.pdf [retrieved on 2020-09-01]**
• **TANGUY OPHOFF ET AL: "Exploring RGB+Depth Fusion for Real-Time Object Detection", SENSORS, vol. 19, no. 4, 19 February 2019 (2019-02-19), pages 1-13, XP055726658, DOI: 10.3390/s19040866**
• **István Sárándi ET AL: "How Robust is 3D Human Pose Estimation to Occlusion?", , 28 August 2018 (2018-08-28), XP055726732, Retrieved from the Internet: URL:https://arxiv.org/pdf/1808.09316.pdf [retrieved on 2020-09-01]**

**Description**

Technical field

The present invention relates to image processing, particularly to a field of 3D localization of an object based on image and depth data.

Technical background

Computer-implemented detection of individuals and objects in 3D space is essential for service, domestic and industrial robots that shall interact with their environment. Recent advances have basically solved the unimodal 2D object recognition problem on 2D images. Different strategies for fusing multiple sensor modalities, such as image and depth data, have also been studied with focus on 2D detection.

However, a particular issue of these detection models is to localize a 3D object reference point, such as a 3D centroid, of an individual or an object represented by image and depth data if the individual/object has non-negligible spatial dimensions in three dimensions. Furthermore, large-scale real-world training datasets for 3D detection are scarce and expensive to annotate with 3D ground truth, so that a detection model should particularly be configured to exhibit an outstanding detection quality being trained with a small training data set.

For object recognition based on image data, high-performance algorithms, such as YOLO v3 one-stage detection, are well-known. The YOLO v3 algorithm allows to obtain object outline data, such as bounding boxes indicating the 2D region in which a detected individual/object is located. However, as individuals/objects to be detected may have a significant extension also in the depth dimension, many applications, for instance in robotics, require determining of a 3D object reference point, such as the center of mass or a 3D centroid of the individual/object within the object boundaries. The conventional algorithms for 2D object detection do not provide such a 3D object reference point. They also do not fully exploit additional depth data that can simultaneously be acquired using existing sensors. Document Timm Linder ET AL: "Towards Accurate 3D Person Detection and Localization from RGB-D in Cluttered Environments", 5 October 2018 discloses a method of accurately detecting and localizing 3D centroids of persons in RGB-D scenes with frequent heavy occlusions, as often encountered in industrial and service robotics use-cases.

Document TANGUY OPHOFF ET AL: "Exploring RGB+Depth Fusion for Real-Time Object Detection", SENSORS, vol. 19, no. 4, 19 February 2019 (2019-02-19), pages 1-13 discloses a fusion model for fusing depth information on top of normal RGB data for camera-based object detection. A manner to perform a sensor fusion is disclosed with a single-pass convolutional neural network (CNN) architecture, enabling real-time processing on limited hardware.

Document Istvan Sarandi ET AL: "How Robust is 3D Human Pose Estimation to Occlusion?", https://arxiv.org/pdf/1808.09316.pdf, 28 August 2018 discloses a method for 3D pose estimation.

Summary of the invention

The present invention is defined as set out in the appended claims.

Brief description of the drawings

Embodiments are described in more detail in conjunction with the accompanying drawings, in which:

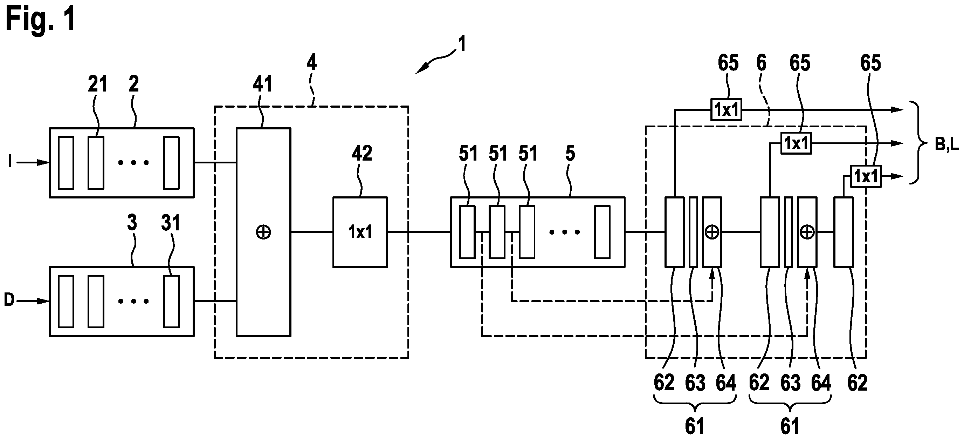

Figure 1    is a schematic view on the architecture of a convolutional neural network trained as a detection model for determining 3D localization data from an image data item and a corresponding depth data item.

Description of embodiments

Figure 1 schematically shows an architecture of a convolutional neural network 1 for processing input data including image data, such as RGB data, and corresponding depth data. Each image data item is associated with a depth data item so that both refer to the same scenery. Image data may be obtained e.g. by means of a camera. The image data may comprise one or more channels of pixel matrices, such as color channels of RGB data or the like.

Depth data can be obtained by an appropriate depth sensor based on LiDAR, Radar, ultrasonic sensors or other sensors, which are capable of capturing a pixel matrix wherein each pixel is associated with a distance value.

The network architecture may be similar to a YOLO v3 network which is modified to also consider the depth data and to estimate 3D localization data.

Basically, the convolutional neural network 1 includes a first set 2 of consecutive layers 21. The layers 21 of the first set 2 may include consecutive convolution, activation and normalization layers as well as residual blocks whose respective configuration is well-known. The number of consecutive convolutional layers of the first set 2 may be between 4 and 60, preferably between 5 and 30. In the input of the first set of layers 21 an image data item I is fed. The first set 2 of layers 21 acts as a feature extractor for the image data item I to obtain one or more image data features.

Furthermore, a second set 3 of consecutive layers 31 is provided. The layers 31 of the second set 3 may include consecutive convolution, activation and corresponding normalization layers as well as residual blocks whose configuration is well-known. The number of consecutive convolutional layers 31 of the second set 3 may be between 5 and 30. In the input of the second set 3 of layers 31 a depth data item D is fed. The second set 3 of layers 31 acts as a feature extractor for the depth data item D to obtain one or more depth data features.

By means of a fusion layer 4, the image data features and the depth data features are fused. Particularly, a concatenation layer 41 is applied to concatenate the feature maps along the channel dimension. Using a 1x1 convolution layer 42 the increased size of the concatenated feature maps is reduced by halving the number of channels to the original channel dimension.

The output of the fusion layer 4 is further processed in a third set 5 of consecutive layers 51. The layers 51 of the third set 5 may include consecutive convolution, activation and associated normalization layers as well as residual blocks whose configuration is well-known. The number of consecutive convolutional layers of the third set 2 may be between 5 and 30. The third set 5 of layers 51 acts as a feature extractor for the combined image and depth data features.

The output of the third set 5 of layers 51 is fed to an output block 6.

The layers of the output block 6 may be included in one or more stages 61 of blocks of consecutive convolution layers 62 each including particularly an activation layer and/or an associated normalization layer for the respective convolution layer, followed by an upsampling layer 63 and a concatenation layer 64 which concatenates the resulting of the upsampling layers 63 with the output of a residual block of the third set of layers 51. The configuration of the residual blocks is well-known in the art. The number of consecutive convolutional layers 62 of each block in the output block 6 may be between 5 and 30. The outputs of each block of convolution layers 62 are input to an 1x1 output layer 65.

The one or more concatenation layers 64 of the output block 6 may combine feature maps from the third set 5 of layers 51 using skip connections. Furthermore, upsampling layers 63 may be provided, particularly directly preceding the concatenation layers 64.

The upsampling layers 63 increase the feature map size in width and height dimensions, and are thus a counterpart to the original convolutions in the feature extractor which reduce those. Upsampling can be implemented via deconvolution. The entire construct (first reducing resolution, than increasing it again) resembles a "feature pyramid".

Like in the original YOLO v3, the upsampling layers allow to obtain predictions at three different scales. The function of the upsampling layers 63 is part of the well-known YOLO v3 architecture.

From one or more layers 61 of the output block 6, feature maps are tapped and supplied to 1x1 convolution layers which provide the outputs indicating bounding data and 3D localization data. The 1x1 output layers 65 are configured to compute regression targets tcu, tcv, tcz and the existing ones for 2D bounding boxes. This may be completely learned from data. In the following formula, it is described how the outputs of the 1x1 layer (tcu, tcv, tcz are part of those) are used to compute cu, cv, cz and subsequently cx, cy, cz. This happens in a postprocessing step, after the network forward pass has been completed.

The bounding data B may correspond to bounding box data indicating an area in the provided image and depth data in which an object has been identified. For each of the identified/classified objects a 3D localization data has been determined which indicate an object reference point L. The object reference point indicates a significant position within the area defined by the bounding data (bounding box). So, the object reference point may indicate a 3D centroid, a center of mass, a geometrical center, a human body joint or the like.

To estimate the metric 3D coordinates $c_x$, $c_y$, $c_z$ of the object reference point, the $c_x$ and $c_y$ coordinates may be inferred from pixel coordinates $c_u$, $c_v$. Pixel coordinates $c_u$, $c$, are expressed relative to the predicted 2D bounding box with upper-left corner $b_u$, $b_v$ and width and height $b_w$, $b_h$. A sigmoid function is used to encourage the object reference point to lie within the 2D bounding box. Instead of regressing $c_u$, $c_v$ directly, the regression targets $tc_u$, $tc_v$ are the argument to this sigmoid function. Instead, $c_z$ is regressed directly in metric scale via the regression target $tc_z$:

$$c_u = b_u + b_w \sigma(t_{c_u})$$

$$c_v = b_v + b_h \sigma(t_{c_v})$$

$$c_z = t_{c_z}$$

After $c_u$, $c_v$ and $c_z$ have been computed, the $c_x$ and $c_y$ coordinates can be obtained by back-projecting $c_u$ and $c_v$ using $c_z$ and a given camera matrix K. In computer vision a camera matrix or (camera) projection matrix is a matrix which describes the mapping of a pinhole camera from 3D points in the world to 2D points in an image. This is a well-known concept in computer vision usually obtained through calibration of the camera.

The output parameter structure substantially may correspond to the standard YOLO v3 configuration, where the final 1x1 convolutions of the output stages are extended to predict the regression targets $tc_u$, $tc_v$, $tc_z$ for each bounding box. The training is based on a loss that is minimized during the training process (i.e. required for the backward pass, to compute the gradient). For instance, an l1 loss can be used for tcz and the sigmoid binary cross-entropy loss for tcu and tcv.

For training the convolutional neural network 1, basically stochastic gradient-descent optionally with differing learning rates can be applied. Basically, training is made by training data sets including image data, depth data as well as associated objects indicated by bounding data, such as a bounding box, and by 3D localization data, such as an object reference point.

The training data sets can be obtained from real environment setups or can be synthetically generated, e.g. based on CAD models or photogrammetric 3D scans. To obtain a sufficiently diverse training data set, domain randomization can be performed by, for instance, varying object poses, object count and illumination conditions. Particularly, the training data sets may at least partly be rendered using a semi-photorealistic computer graphics engine to generate synthetic image and depth data items. Certain sensor effects, such as noise patterns, might be simulated in the RGB and/or depth data. The bounding data and 3D localization data of the associated objects can be straight-forward obtained from the CAD models.

The training process involves a 2D data augmentation step, composed of cropping and expansion of randomly selected image parts with a corresponding adjustment of the bounding data (bounding boxes) so that image parts containing objects can be zoomed in and zoomed out. The obtained image part is then resized to a fixed pixel matrix size to normalize image and depth data dimensions for the convolutional neural network 1. As directly applying this existing form of crop and expansion augmentation and resizing to the pixel matrix dimension of the training data can distort the "understanding" of objects' matrix scale in the perceived environment, this augmentation is enhanced to be depth-aware so that bounding data and 3D localization data of the associated objects are adapted to the current zoom factor.

The zoom factor is based upon the factor applied for the resizing to the pixel matrix dimension needed for training the convolutional neural network. For a square input resolution of $d_n \times d_n$ pixels, a random square crop of the size $d_c \times d_c$ is selected. Under the assumption of a single image sensor with a known camera matrix K, a crop may be resized to the input dimension $d_n \times d_n$

$$s = \frac{d_n}{d_c}$$

applying a zoom factor of . As zooming is usually attributed to a change in focal length and to keep the intrinsic parameters intact, the scaling is applied to the depth values, such that

$$\begin{pmatrix} u \\ v \\ 1 \end{pmatrix} = \mathbf{K} \begin{pmatrix} s & & \\ & s & \\ & & 1 \end{pmatrix} \begin{pmatrix} x \\ y \\ z \end{pmatrix} \frac{1}{z} = \mathbf{K} \begin{pmatrix} x \\ y \\ \frac{z}{s} \end{pmatrix} \frac{1}{\frac{z}{s}}$$

wherein x, y, z is a 3D point resolved in the image sensor frame and $\frac{z}{s}$ is the new scaled depth at input image pixel (u, v).

In addition to depth scaling for generating training data sets with image data items and corresponding depth data items, the 3D localization data of the associated object is scaled as well.

Furthermore, a transfer learning strategy may be applied which may benefit from existing large-scale 2D object detection data sets. Thereby, the layers 21, 51 of the first and third set may be initialized by means of existing YOLO v3 RGB detector weights pre-trained with existing 2D object detection data sets. That means that the weights may be initially set up for the first set 2 of layers 21 and the third set 5 of layers, while for the second set 3 of layers 31 the weights of the first set 2 of layers 21 are duplicated. However, the first layer of the second set 3 of layers 31 may then be initialized from scratch.

At the start of training, the fusion layer 4 is initialized so that the image data features at the output of the first set 2 of layers 21 are forwarded unchanged to the input of the third set 5 of layers 51. The weights of the newly added neurons of the output block are randomly initialized, while leaving the original 2D detection weights unchanged.

By means of this initialization strategy, the pre-trained 2D performance can be maintained despite the changes to the network architecture.

## Claims

1. A computer-implemented method for training a convolutional neural network (1),

   wherein the convolutional neural network (1) is provided with a first set (2) of consecutive layers (21), a second set (3) of consecutive layers (31) and a third set (5) of consecutive layers (51), each layer being configured with one or more filters, wherein a fusion layer (4) of the convolutional neural network (1) is configured to fuse one or more image data features obtained by the first set (2) of layers (21) and one or more depth data features obtained by the second set (3) of layers (31), wherein the convolutional neural network (1) is trained to associate an image data item and a depth data item to an identification/classification of an object and corresponding 3D localization data for the identified/classified object, wherein the 3D localization data includes object reference point data,
   wherein the convolutional neural network (1) is trained using training data, wherein each training data item includes image data and depth data, and 3D localization data, wherein at least a part of the training data items is synthetically generated,
   wherein a further training data item is generated from an image data item and corresponding depth data item of a training data item by

      - cropping or expanding randomly selected image parts of the image data from the training data item while maintaining the aspect ratio;

- resizing the dimensions of the cropped/expanded image parts to the dimension of the image data item of the training data item by applying a zoom factor which depends on the dimension of the image data item of the training data item and the dimension of the cropped/expanded image parts; and
- adapting the depth data item and the associated 3D localization data of the identified/classified object depending on the zoom factor to obtain the further training data item.

2. Method according to claim 1, wherein the synthetically generated training data is rendered using a 3D graphics engine with foreground and background randomization, wherein one or multiple foreground objects are included in each training data item.

3. A computer program product comprising instructions which, when the program is executed by a computer, cause the computer to carry out the method according to any of claims 1 to 2.

4. A computer-readable medium comprising instructions which, when executed by a computer, cause the computer to carry out the method according to any of the claims 1 to 2.

**Patentansprüche**

1. Computerimplementiertes Verfahren zum Trainieren eines neuronalen Faltungsnetzwerks (1),

wobei das neuronale Faltungsnetzwerk (1) mit einem ersten Satz (2) von aufeinanderfolgenden Schichten (21), einem zweiten Satz (3) von aufeinanderfolgenden Schichten (31) und einem dritten Satz (5) von aufeinanderfolgenden Schichten (51) versehen ist, wobei jede Schicht mit einem oder mehreren Filtern konfiguriert ist, wobei eine Fusionsschicht (4) des neuronalen Faltungsnetzwerks (1) so konfiguriert ist, dass sie ein oder mehrere Bilddatenmerkmale, die durch den ersten Satz (2) von Schichten (21) erhalten wurden, und ein oder mehrere Tiefendatenmerkmale, die durch den zweiten Satz (3) von Schichten (31) erhalten wurden, fusioniert, wobei das neuronale Faltungsnetzwerk (1) trainiert wird, um ein Bilddatenelement und ein Tiefendatenelement mit einer Identifizierung/Klassifizierung eines Objekts und entsprechenden 3D-Lokalisierungsdaten für das identifizierte/klassifizierte Objekt zu verknüpfen, wobei die 3D-Lokalisierungsdaten Objektreferenzpunktdaten enthalten,

wobei das neuronale Faltungsnetzwerk (1) unter Verwendung von Trainingsdaten trainiert wird, wobei jedes Trainingsdatenelement Bilddaten und Tiefendaten sowie 3D-Lokalisierungsdaten enthält, wobei zumindest ein Teil der Trainingsdaten synthetisch erzeugt wird, wobei ein weiteres Trainingsdatenelement aus einem Bilddatenelement und einem entsprechenden Tiefendatenelement eines Trainingsdatenelements erzeugt wird, durch

- Beschneiden oder Vergrößern zufällig ausgewählter Bildteile der Bilddaten aus dem Trainingsdatenelement unter Beibehaltung des Seitenverhältnisses;
- Anpassen der Dimensionen der beschnittenen/erweiterten Bildteile an die Dimension des Bilddatenelements des Trainingsdatenelements durch Anwenden eines Zoomfaktors, der von der Dimension des Bilddatenelements des Trainingsdatenelements und der Dimension der beschnittenen/erweiterten Bildteile abhängt; und
- Anpassen des Tiefendatenelements und der zugehörigen 3D-Lokalisierungsdaten des identifizierten/klassifizierten Objekts in Abhängigkeit vom Zoomfaktor, um das weitere Trainingsdatenelement zu erhalten.

2. Verfahren nach Anspruch 1, wobei die synthetisch erzeugten Trainingsdaten unter Verwendung einer 3D-Grafikmaschine mit Randomisierung von Vorder- und Hintergrund gerendert werden, wobei ein oder mehrere Vordergrundobjekte in jedem Trainingsdatenelement enthalten sind.

3. Computerprogrammprodukt, das Anweisungen enthält, die, wenn das Programm durch einen Computer ausgeführt wird, den Computer veranlassen, das Verfahren gemäß einem der Ansprüche 1 bis 2 auszuführen.

4. Computerlesbares Medium, das Anweisungen enthält, die, wenn sie durch einen Computer ausgeführt werden, den Computer veranlassen, das Verfahren nach einem der Ansprüche 1 bis 2 auszuführen.

**Revendications**

1. Procédé mis en œuvre par ordinateur pour l'entraînement d'un réseau neuronal convolutif (1), dans lequel le réseau neuronal convolutif (1) est doté d'un premier ensemble (2) de couches consécutives (21), d'un deuxième ensemble (3) de couches consécutives (31) et d'un troisième ensemble (5) de couches consécutives (51), chaque couche étant configurée avec un ou plusieurs filtres, où une couche de fusion (4) du réseau neuronal convolutif (1) est configurée pour fusionner une ou plusieurs caractéristiques de données d'image obtenues par le premier ensemble (2) de couches (21) et une ou plusieurs caractéristiques de données de profondeur obtenues par le deuxième ensemble (3) de couches (31), le réseau neuronal convolutif (1) étant entraîné à associer un élément de données d'image et un élément de données de profondeur à une identification/classification d'un objet et à des données de localisation 3D correspondantes pour l'objet identifié/classifié, les données de localisation 3D comprenant des données de point de référence d'objet, dans lequel le réseau neuronal convolutif (1) est entraîné à l'aide de données d'entraînement, chaque élément de données d'entraînement comprenant des données d'image, des données de profondeur et des données de localisation 3D, au moins une partie des éléments de données d'entraînement étant générée de manière synthétique,

dans lequel un autre élément de données d'entraînement est généré à partir d'un élément de données d'image et d'un élément de données de profondeur correspondant d'un élément de données d'entraînement :

    - en recadrant ou en agrandissant des parties d'image sélectionnées au hasard dans les données d'image de l'élément de données d'entraînement, tout en conservant le rapport hauteur/largeur ;
    - en redimensionnant les dimensions des parties d'image recadrées/agrandies à la dimension de l'élément de données d'image de l'élément de données d'entraînement en appliquant un facteur de zoom qui dépend de la dimension de l'élément de données d'image de l'élément de données d'entraînement et de la dimension des parties d'image recadrées/agrandies ; et
    - en adaptant l'élément de données de profondeur et les données de localisation 3D associées de l'objet identifié/classifié en fonction du facteur de zoom afin d'obtenir l'élément de données d'apprentissage supplémentaire.

2.  Procédé selon la revendication 1, dans lequel les données d'entraînement générées de manière synthétique sont rendues à l'aide d'un moteur graphique 3D avec randomisation de l'avant-plan et de l'arrière-plan, un ou plusieurs objets d'avant-plan étant inclus dans chaque élément de données d'entraînement.

3.  Produit programme d'ordinateur comprenant des instructions qui, lorsque le programme est exécuté par un ordinateur, amènent l'ordinateur à exécuter le procédé selon l'une quelconque des revendications 1 et 2.

4.  Support lisible par ordinateur comprenant des instructions qui, lorsqu'elles sont exécutées par un ordinateur, amènent l'ordinateur à mettre en œuvre le procédé selon l'une quelconque des revendications 1 à 2.

**Fig. 1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TIMM LINDER et al.** *Towards Accurate 3D Person Detection and Localization from RGB-D in Cluttered Environments,* 05 October 2018
- **TANGUY OPHOFF et al.** Exploring RGB+Depth Fusion for Real-Time Object Detection. *SENSORS,* 19 February 2019, vol. 19 (4), 1-13
- **ISTVAN SARANDI et al.** *How Robust is 3D Human Pose Estimation to Occlusion?,* 28 August 2018, https://arxiv.org/pdf/1808.09316.pdf